# EUROPÄISCHE PATENTSCHRIFT

(11) **EP 3 540 385 B1**
(45) Veröffentlichungstag und Bekanntmachung des Hinweises auf die Patenterteilung: **28.10.2020**
(21) Anmeldenummer: 19156723.9
(22) Anmeldetag: 12.02.2019
(51) Int. Cl.: G01G 19/02

(54) **HOHLPROFIL FÜR WIM SENSOR UND WIM SENSOR MIT HOHLPROFIL**
HOLLOW PROFILE FOR WIM SENSOR AND WIM SENSOR WITH A HOLLOW PROFILE
PROFILÉ CREUX POUR CAPTEUR WIM ET CAPTEUR WIM À PROFILÉ CREUX

(30) Priorität: 16.03.2018 EP 18162237
(43) Veröffentlichungstag der Anmeldung: 18.09.2019
(73) Patentinhaber: Kistler Holding AG, 8408 Winterthur (CH)
(72) Erfinder: Ribi, Adrian, 8404 Winterthur (CH)

(56) Entgegenhaltungen:
- EP-A1- 0 654 654
- KR-A- 20130 012 630
- US-A- 5 501 111

## Beschreibung

### Technisches Gebiet

Die Erfindung betrifft ein Hohlprofil für einen WIM Sensor sowie einen WIM Sensor mit einem solchen Hohlprofil gemäss der Definition der Oberbegriffe der unabhängigen Ansprüche.

### Stand der Technik

Weigh-in-Motion (WIM) Sensoren sind in eine Nut in einer Fahrbahn eingebracht und ermitteln dynamische Bodenreaktionskräfte, welche durch ein Fahrzeug auf der Fahrbahn hervorgerufen sind. Unter der Bodenreaktionskraft wird die Reaktion eines Bodens in Form einer Kraft auf eine erste Kraft verstanden, welche erste Kraft ein Körper auf den Boden überträgt. Üblicherweise ist ein Bestandteil eines WIM Sensors ein lang ausgestaltetes Hohlprofil, in welchem Hohlprofil mehrere Kraftsensoren angeordnet sind, und welches Hohlprofil eine Radspur des Fahrzeuges durchquert. Eine Radspur ist die Trajektorie auf der Fahrbahn, welche ein Rad des Fahrzeuges auf der Fahrbahn bei der Fahrt über die Fahrbahn beschreibt.

In EP0654654A1 wird ein WIM Sensor, genannt Hohlprofil-Aufnehmer, zum Einbau in Fahrbahnen beschrieben, welcher Bodenreaktionskräfte ermitteln soll und innerhalb dessen Hohlprofils Kraftsensoren angeordnet sind, die kraftschlüssig mit der Wand eines Rohrteils verbunden sind. Das Rohrteil weist einen Krafteinleitungsflansch auf, der mit dem Rohrteil derart verbunden ist, dass eine Kraft, welche auf den Krafteinleitungsflansch wirkt, gebündelt auf den Kraftsensor wirkt.

Des Weiteren offenbart EP0654654A1 einen Krafteinleitungsflansch mit einer plattenähnlichen Form. Ebenfalls wird beschrieben, dass zur Befestigung in der Fahrbahn ein Verankerungsflansch auf der Gegenseite des Rohrteils angebracht ist. Der Hohlprofilaufnehmer ist in einer Nut in der Fahrbahn verlegt und ist mit einer Vergussmasse vergossen. Der Verankerungsflansch ist mit dem Untergrund verbunden. Die Nut ist durch eine Länge und eine Breite in einer Ebene der Oberfläche der Fahrbahn und durch eine Tiefe senkrecht zur Oberfläche der Fahrbahn beschrieben. Im Folgenden wird das dem Krafteinleitungsflansch in Funktion entsprechende Teil als Krafteinleitelement bezeichnet. Im Folgenden wird das dem Verankerungsflansch in Funktion entsprechende Teil als Verankerungselement bezeichnet.

Eine Fahrbahn besteht aus einer Deckschicht, auf welcher Fahrzeuge fahren, und einer Unterschicht, welche die Deckschicht abstützt. Die Deckschicht ist im Folgenden dadurch definiert, dass sie bei einer Sanierung der Fahrbahn entfernt und neu aufgetragen wird. Die Unterschicht ist im Folgenden dadurch definiert, dass sie bei einer ersten Sanierung der Fahrbahn erhalten bleibt und erst nach mehreren Sanierungen erneuert wird. Die Dicke der Deckschicht senkrecht zur Fahrbahnoberfläche variiert nach Land und Nutzung der Fahrbahn und liegt zwischen 60 mm und 200 mm, wie im ELLPAG PHASE 2 Report des Forum of European National Highway Research Laboratories von Januar 2009 zu lesen.

Unter Kraftlinien der Kraft, welche ein Rad auf die Fahrbahn ausübt, wird eine Veranschaulichung der wirkenden Kraft in Teilbereichen des WIM Sensors verstanden. So führen Kraftlinien von dem Rad auf der Fahrbahnoberfläche in das Krafteinleitungselement, von wo sie gebündelt hauptsächlich den Kraftsensor durchsetzen, welcher im Hauptkraftschluss angeordnet ist. Die Wandungen des Rohrteils bilden einen Nebenkraftschluss und sind von einem kleineren Teil der Kraftlinien durchsetzt. Die Kraftlinien durchsetzen anschliessend den Verankerungsflansch, der auf einem möglichst steifen Untergrund aufliegt. Aufgabe des Verankerungsflansches ist es, die Kraftlinien auf einen möglichst steifen Untergrund zu leiten. Eine hohe Steifigkeit des Untergrunds ist wichtig, damit ein gut definierter und grosser Teil der Kraft auf den Kraftsensor im Hauptkraftschluss wirkt. Ein verformbarer Untergrund wirkt sich Nachteilig aus und verfälscht die vom WIM Sensor ermittelte Kraft. Das Krafteinleitelement des WIM Sensor sinkt bei einer Krafteinwirkung in den verformbaren Untergrund ein. Da die Auflagefläche eines Rades auf der Fahrbahn grösser ist als die Breite des WIM Sensors in Fahrrichtung, wird das Rad bei einem einsinken des Krafteinleitelements von der umliegenden Fahrbahnoberfläche abgestützt. Dies mindert die auf das Krafteinleitelement wirkende Kraft. Eine feste Verankerung des Hohlprofils mit dem möglichst steifen Untergrund ist daher essentiell für die korrekte Ermittlung der auf eine Fahrbahnoberfläche wirkenden Kraft.

Elektronische Elemente, welche zur Erfassung oder Verstärkung oder Wandlung oder Auswertung der von den Kraftsensoren ermittelten Kraftsignale benötigt werden, sind im Stand der Technik EP0654654A1 aus Platzgründen zumindest teilweise ausserhalb des Hohlprofils angeordnet. Auch sind üblicherweise elektronische Elemente, welche zum Betrieb eines WIM Sensors benötigt werden aus Platzgründen ausserhalb des Hohlprofils angeordnet, wie beispielsweise ein Speicher für elektrische Energie. Diese elektronischen Elemente werden im Folgenden als WIM Elektronik bezeichnet.

Eine Unterbringung der WIM Elektronik in einem Gehäuse neben der Fahrbahn ist üblich, was jedoch lange Kabel benötigt, welche elektromagnetische Störungen der WIM Elektronik begünstigen.

Eine erste Aufgabe der vorliegenden Erfindung liegt in der Bereitstellung eines Volumens in dem Hohlprofil, welches Hohlprofil für einen WIM Sensor nutzbar ist, in welchem Volumen WIM Elektronik nah am Kraftsensor untergebracht wird, wobei die Länge und Breite der Nut zum Einbau des WIM Sensors in der Fahrbahn gegenüber dem Stand der Technik gleich bleibt oder geringer ist und die Nut mit ihrer Tiefe vollständig in der Deckschicht verbleibt und die Unterschicht unangetastet belässt.

Eine weitere Aufgabe der vorliegenden Erfindung liegt in der Bereitstellung eines Volumens in dem Hohlprofil, welches Hohlprofil für einen WIM Sensor nutzbar ist, in welchem Volumen WIM Elektronik nah am Kraftsensor untergebracht wird, wobei das Hohlprofil eine hohe Steifigkeit aufweist für die korrekte Ermittlung der auf das Krafteinleitelement wirkenden Kraft.

### Darstellung der Erfindung

Zumindest eine dieser Aufgaben wird durch die Merkmale des unabhängigen Anspruchs gelöst.

Die Erfindung betrifft ein Hohlprofil für einen WIM Sensor; welches Hohlprofil entlang einer Längsrichtung lang ausgestaltet ist; welches Hohlprofil ein plattenförmiges Krafteinleitelement aufweist; welches Hohlprofil ein Verankerungselement aufweist; zwischen welchen Krafteinleitelement und Verankerungselement ein Rohrteil angeordnet ist; welches Rohrteil einen ersten Hohlraum umschliesst; welches Verankerungselement und welches Rohrteil und welches Krafteinleitelement einstückig ausgeführt sind; welches Rohrteil mit dem Krafteinleitelement und mit dem Verankerungselement einstückig verbunden ist; wobei das Verankerungselement mindestens einen zweiten Hohlraum umschliesst.

Erster Hohlraum und zweiter Hohlraum sind über die gesamte Länge des Hohlprofils ausgestaltet. Im ersten Hohlraum sind bei Verwendung des Hohlprofils in einem WIM Sensor Kraftsensoren angeordnet. Auf die Kraftsensoren wirkt mindestens teilweise die Kraft, welche auf das Krafteinleitelement wirkt, analog zum Stand der Technik EP0654654A1. Die auf die Kraftsensoren wirkende Kraft wird durch die Formgebung des Verankerungselements, in welchem Verankerungselement der zweite Hohlraum angeordnet ist, unwesentlich verändert gegenüber Kraftsensoren in einem WIM Sensor nach dem Stand der Technik EP0654654A1.

Die erlaubte Höhe eines WIM Sensors ist dadurch beschränkt, dass die Tiefe der Nut nicht bis zur Unterschicht der Fahrbahn reichen darf. Und die erlaubte Höhe eines WIM Sensors ist dadurch beschränkt, dass der WIM Sensor bündig mit der Fahrbahnoberfläche abschliesst. Bündig ist der WIM Sensor mit der Fahrbahnoberfläche, wenn kein Teil des WIM Sensors bezüglich einer Höhenrichtung über die Fahrbahnoberfläche herausragt. Der WIM Sensor weist üblicherweise eine Beschichtung auf dem Krafteinleitelement auf. Die Höhenrichtung ist die Richtung senkrecht zur Fahrbahnoberfläche. Die Tiefe der Nut wird bezüglich der Höhenrichtung verstanden.

Im zweiten Hohlraum ist bei der Verwendung des Hohlprofils in einem WIM Sensor die WIM Elektronik angeordnet. Dadurch werden kurze Kabellängen zwischen WIM Elektronik und Kraftsensoren erreicht. Da in einer Ausführungsform des WIM Sensors ein Teil der WIM Elektronik ein Speicher für elektrische Energie ist, hängt vom Volumen des zweiten Hohlraumes eine Betriebszeit eines WIM Sensors ab, welcher als einzige Energieversorgung den Speicher für elektrische Energie aufweist. Daher ist die Formgebung des Verankerungselements des Hohlprofils derart optimiert, dass die Höhe des Verankerungselements innerhalb des erlaubten Bereiches gehalten ist bei einem grösstmöglichen Volumen des zweiten Hohlraums.

Der erfindungsgemässe WIM Sensor ist in den meisten Fahrbahnen weltweit nutzbar. Das Kriterium für eine Nutzbarkeit ist, dass eine Nut für den Einbau des WIM Sensors die Unterschicht intakt belässt. Dies ist für die meisten Fahrbahnen weltweit gegeben, wenn das Hohlprofil für den WIM Sensor eine maximale Höhe von 60 mm einhält. Die Optimierung der Formgebung des Verankerungselements spart zusätzlich Material für die Herstellung eines solchen Hohlprofils.

### Kurze Beschreibung der Zeichnungen

Im Folgenden wird die Erfindung beispielhaft unter Beizug der Figuren näher erklärt. Es zeigen
- Fig. 1: eine Teilansicht einer mehrspurigen Fahrbahn mit Fahrzeugen und mit in der Fahrbahn angeordneten WIM Sensoren,
- Fig. 2: eine Teilansicht eines Hohlprofils für einen WIM Sensors mit Kraftsensor nach dem Stand der Technik im in einer Fahrbahn eingebautem Zustand,
- Fig. 3: eine Teilansicht einer vorteilhaften Ausführungsform eines Hohlprofils für einen WIM Sensors mit Kraftsensor im in einer Fahrbahn eingebautem Zustand,
- Fig. 4: eine schematische Teilansicht eines Hohlprofils für einen WIM Sensor mit Veranschaulichung einer Verformung unter Krafteinwirkung,
- Fig. 5: eine schematische Teilansicht eines vorteilhaften Hohlprofils für einen WIM Sensor mit Veranschaulichung einer Verformung unter Krafteinwirkung,
- Fig. 6: eine Teilansicht einer mehrspurigen Fahrbahn mit Fahrzeugen und mit vorteilhaft in der Fahrbahn angeordneten WIM Sensoren,
- Fig. 7: eine Teilansicht einer vorteilhaften Ausführungsform eines Hohlprofils für einen WIM Sensors mit Kraftsensor.

### Wege zur Ausführung der Erfindung

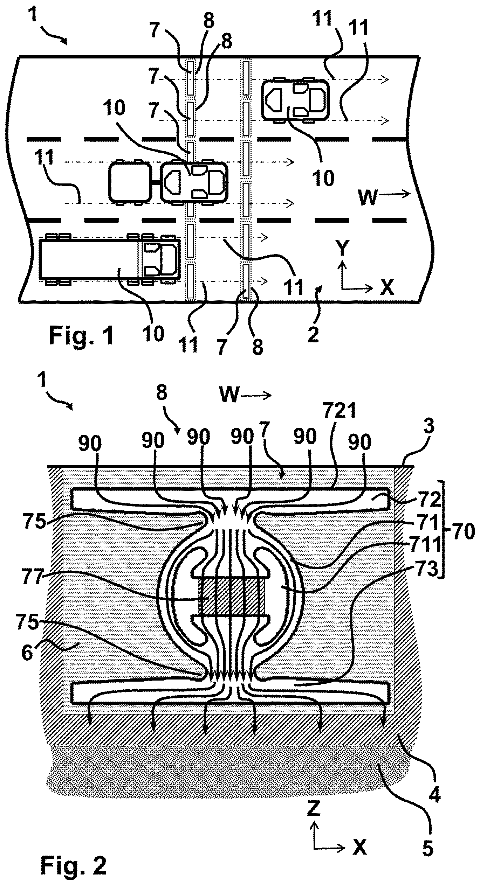

Fig. 1 zeigt eine Teilansicht einer Fahrbahn 1 mit in der Fahrbahn 1 angeordneten WIM Sensoren 7. Die WIM Sensoren 7 sind mit ihrer Längsachse senkrecht zur Fahrbahnrichtung W ausgerichtet und überdecken jeweils eine Radspur 11 eines Fahrzeuges 10, welche Radspur 11 als gepunktete Linie mit Pfeil zur Richtungsangabe dargestellt ist. Die Fahrbahnrichtung W ist die Richtung der Fahrbahn, in die sich Fahrzeuge 10 auf der Fahrbahn 1 vornehmlich bewegen. Das erfindungsgemässe Hohlprofil 70 ist zur Verwendung in einem WIM Sensor 7 vorgesehen, welcher in einer Fahrbahn 1 angeordnet ist.

Fig. 2 zeigt eine Teilansicht eines Hohlprofils 70 für einen WIM Sensor 7 nach dem Stand der Technik. Das Hohlprofil 70 ist in die Deckschicht 4 der Fahrbahn 1 in einer Nut 8 angeordnet und mit einer Vergussmasse 6 innerhalb der Nut 8 fixiert. Die Vergussmasse 6 besteht in einer Ausführungsform aus verschiedenen Werkstoffen die in unterschiedlichen Positionen in der Nut 8 angeordnet sind.

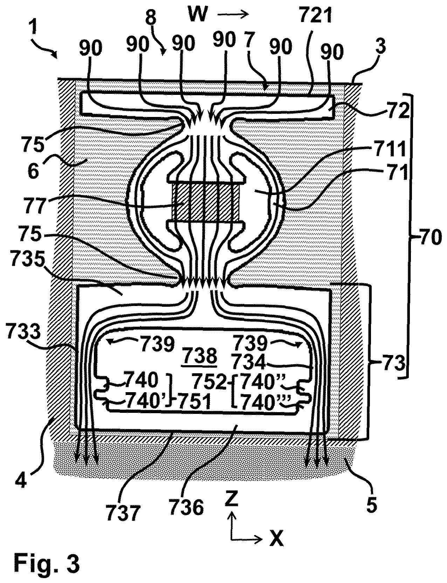

Fig. 3 zeigt eine Teilansicht einer vorteilhaften Ausführungsform eines Hohlprofils 70 für einen WIM Sensor 7. Das Hohlprofil 70 ist in einer Ansicht senkrecht zur Längsrichtung Y gezeigt, in welche Längsrichtung Y das Hohlprofil 70 lang ausgestaltet ist.

Das Hohlprofil 70 weist ein plattenförmiges Krafteinleitelement 72 auf, welches senkrecht zur Längsrichtung Y in seiner grösseren Ausdehnung eine Breite des Hohlprofils 70 in Breitenrichtung X aufweist und senkrecht zur Längsrichtung Y in seiner kleineren Ausdehnung eine Stärke des Krafteinleitelements 72 in Höhenrichtung Z aufweist. Das Krafteinleitelement 72 ist bei vorgesehener Verwendung des Hohlprofils 70 weitgehend parallel zur Fahrbahnoberfläche 3 ausgerichtet, mit der Höhenrichtung Z senkrecht zur Fahrbahnoberfläche 3.

Die Fläche des Krafteinleitelements 72, welche der Fahrbahnoberfläche 3 am nächsten ist, ist die Krafteinleitfläche 721. Auf das Hohlprofil 70 bezogen ist die Höhenrichtung Z senkrecht zur Krafteinleitfläche 721. Das Hohlprofil 70 ist in eine Nut 8 in die Fahrbahn 1 eingebracht, mit einer Breite der Nut 8 in Fahrbahnrichtung 7 und einer Tiefe der Nut 8 in Höhenrichtung Z. Das Hohlprofil 70 weist ein Verankerungselement 73 auf. Zwischen Krafteinleitelement 72 und Verankerungselement 73 ist ein Rohrteil 71 angeordnet, welches Rohrteil 71 den ersten Hohlraum 711 umschliesst. Das Verankerungselement 73 und das Rohrteil 71 und das Krafteinleitelement 72 sind einstückig ausgeführt. Das Rohrteil 71 ist mit dem Krafteinleitelement 72 und mit dem Verankerungselement 73 einstückig verbunden.

Die Verbindung 75 von Krafteinleitelement 72 und Rohrteil 71 und die Funktion des Krafteinleitelements 72 und des Rohrteils 71 sind identisch mit dem Stand der Technik in EP0654654. Kräfte, welche auf die Fahrbahnoberfläche 3 wirken, werden durch das Krafteinleitelement 72 in das Rohrteil 71 gebündelt und wirken mehrheitlich auf mindestens einen Kraftsensor 77, welcher im Rohrteil 71 angeordnet ist.

Das Verankerungselement 73 ist in bevorzugter Ausführungsform weitgehend quaderförmig ausgeführt, mit einem weitgehenden rechteckigen Querschnitt senkrecht zur Längsachse, wie in Fig. 3 gezeigt. Das Verankerungselement 73 weist im rechteckigen Querschnitt ein lichtes Profil auf, welches vollständig vom rechteckigen Querschnitt umschlossen ist. Das Verankerungselement 73 umschliesst dadurch den zweiten Hohlraum 738. Der zweite Hohlraum 738 ist begrenzt durch vier Wandungen mit je einer inneren Fläche, welche innere Fläche zum zweiten Hohlraum 738 gerichtet ist, und je einer äusseren Fläche. Die vier Wandungen werden mit oberer Wandung 735, unterer Wandung 736, vordere Wandung 733 und hintere Wandung 734 bezeichnet. Die äusseren Flächen der Wandungen bilden die Flächen des quaderförmigen Verankerungselements 73. Krafteinleitelement 72 und Verankerungselement 73 sind in vorteilhafter Ausführungsform diametral um das Rohrteil 71 angeordnet.

Die dem Rohrteil 71 abgewandte äussere Fläche, untere Verankerungsfläche 737 genannt, ist im eingebauten Zustand des Hohlprofils 70 weitgehend parallel zur Fahrbahnoberfläche 3 ausgerichtet. Die Verankerungsfläche ist Teil der unteren Wandung 736.

Die plattenförmige obere Wandung 735 des Verankerungselements 73 ist weitgehend parallel zur unteren Wandung 736 angeordnet. Die äussere Fläche der oberen Wandung 735 weist eine einstückige Verbindung 75 mit dem Rohrteil 71 auf. Die Verbindung 75 von oberer Wandung 735 und Rohrteil 71 ist derart ausgeführt, dass Kraftlinien 90, welche gebündelt aus dem Rohrteil 71 austreten, auf die obere Wandung 735 wirken, analog zum Stand der Technik aus EP0654654.

Die innere Fläche der oberen Wandung 735 ist im Gegensatz zum Stand der Technik nicht von einer steifen Unterschicht 5 abgestützt, da der zweite Hohlraum 738 zwischen oberer Wandung 735 und Unterschicht 5 angeordnet ist. Die Ausgestaltung der oberen Wandung 735 und der vorderen Wandung 733 und der hinteren Wandung 734 und der unteren Wandung 736 des Hohlprofils 70 ist derart gestaltet, dass bei Verwendung des Hohlprofils 70 in einem WIM Sensor 7 und einer definierten äusseren Krafteinwirkung auf das Krafteinleitelement 72 eine Auslenkung der oberen Wandung 735 in Richtung der unteren Wandung 736 kleiner 50 Mikrometer bezüglich der Ausgangslage der oberen Wandung 735 ohne äussere Krafteinwirkung ist. Die definierte äussere Krafteinwirkung ist willkürlich festgelegt und entspricht der Kraft, welche ein Rad 12 mit einer Auflagefläche 120 von 315 mm mal 200 mm auf die Fahrbahn 1 und den in der Fahrbahn 1 angeordneten WIM Sensor 7 ausübt, welches Rad 12 mit 120 kN auf die Fahrbahn 1 gedrückt wird.

Die Ausgestaltung des Hohlprofils 70 ist zusätzlich derart, dass bei Verwendung des Hohlprofils 70 in einem WIM Sensor 7 die auf eine Fläche senkrecht zur Höhenrichtung Z normierte Steifigkeit, im Folgenden auf Fläche normierte Steifigkeit, in Höhenrichtung Z des WIM Sensors 7 grösser als 500 MPa/mm bei einer Temperatur des Hohlprofils 70 von 20°C ist. Die auf Fläche normierte Steifigkeit ist wie folgt definiert. Das Hohlprofil 70 ist als Feder anzusehen mit einer Federkonstante k₁ und der Kraftsensor 77 ist als Feder anzusehen mit einer um mindestens eine Grössenordnung höheren Federkonstante k₂ als die des Hohlprofils 70. Die Gesamtfederkonstante k₃ der beiden in Reihe angeordneten Federn ergibt sich aus dem Reziproken der Summe der Reziproken der Federkonstanten k₃ = (k₁⁻¹ + k₂⁻¹)⁻¹ und ist daher durch die Federkonstante k₁ des Hohlprofils 70 dominiert. Eine Federkonstante ist allgemein definiert als Kraft F pro Längenänderung ΔL mit k₃=F/ΔL. Die auf Fläche normierte Steifigkeit ist die Federkonstante durch eine Fläche A geteilt. Die auf Fläche normierte Steifigkeit ist demnach eine Kraft F geteilt durch eine Fläche A und geteilt durch eine Längenänderung ΔL mit k₃ = F / ΔL /A. Die Fläche A entspricht der Krafteinleitfläche 721 des WIM Sensors 7, welche von dem Rad bedeckt wird. Die Kraft F entspricht dem Teil der Kraft, welche ein Rad 12 mit einer Auflagefläche 120 von 315 mm mal 200 mm auf der Fahrbahn 1 auf die vom Rad 12 bedeckte Krafteinleitfläche 721 ausübt, welches Rad 12 mit 120 kN auf die Fahrbahn 1 gedrückt wird. Es ist zu beachten, dass die Kraft F über der Fläche A nicht gleichförmig wirkt und das Rad 12 über dem WIM Sensor 7 zentriert ist. Die Längenänderung ΔL des Hohlprofils 70 mit Kraftsensor 77 in Höhenrichtung Z ist hauptsächlich gegeben durch die Auslenkung der oberen Wandung 735 in Richtung der unteren Wandung 736 bei Verwendung des Hohlprofils 70 in einem WIM Sensor 7 und der definierten äusseren Krafteinwirkung auf das Krafteinleitelement 72. Die Auslenkung ist bezogen auf die Ausgangslage der oberen Wandung 735 ohne äussere Krafteinwirkung auf das Krafteinleitelement 72. Die Vorgabe von ΔL kleiner 50 Mikrometer ist mit einem Wert von 500 MPa/mm für die auf die Fläche normierte Steifigkeit des WIM Sensors 7.

Daher ist die obere Wandung 735 so ausgestaltet, dass die Kraftlinien 90 in die vordere Wandung 733 und hintere Wandung 734 geleitet werden, wie in Fig. 3 dargestellt. Die vordere Wandung 733 verbindet die obere Wandung 735 und die untere Wandung 736. Die hintere Wandung 734 verbindet die obere Wandung 735 und die untere Wandung 736.

Die obere Wandung 735 weist eine grössere Dicke in Höhenrichtung Z des Hohlprofils 70 auf als das Verankerungselement 73 nach dem Stand der Technik EP0654654A1, jedoch in vorteilhafter Ausführungsform nicht mehr als 1/7 der Ausdehnung des Hohlprofils 70 in Höhenrichtung Z, in besonders bevorzugter Ausführungsform nicht mehr als 1/8 der Ausdehnung des Hohlprofils 70 in Höhenrichtung Z. Zugleich weisst die obere Wandung 735 eine Stärke in Höhenrichtung Z des Hohlprofils 70 von mindestens 1/7 der Ausdehnung des Krafteinleitelements 72 in Breitenrichtung X des Hohlprofils 70 auf. Des Weiteren ist der Übergang von der inneren Fläche der oberen Wandung 735 in die innere Fläche der vorderen Wandung 733 als Hohlkehle 739 ausgeführt. Eine Hohlkehle 739 ist eine konkav gestaltete Ausrundung einer Kante, welche Kante durch zwei rechteckige Platten gegeben ist, welche sich in mehr als einem Punkt berühren und nicht parallel sind. Die Ausrundung weist in einer Schnittansicht die Form eines Kreisabschnittes auf oder einer stetig streng monotonen Funktion. Für jeden Punkt der Hohlkehle 739 kann durch Grenzwertbildung ein Radius bestimmt werden. Der kleinste Radius der Hohlkehle 739 in vorteilhafter Ausführungsform ist grösser als 1/100 der Ausdehnung des Hohlprofils 70 in Höhenrichtung Z und in bevorzugter Ausführungsform grösser als 1/50 der Ausdehnung des Hohlprofils 70 in Höhenrichtung Z.

In bevorzugter Ausführungsform ist der Abstand der Krafteinleitfläche 721 und der unteren Verankerungsfläche 737 entlang der Höhenrichtung Z geringer als 60 mm, in besonders bevorzugter Ausführungsform geringer 55 mm. Die Krafteinleitfläche 721 weist in einer Ausführungsform bei Verwendung in einem WIM Sensor 7 eine Beschichtung auf, welche nicht zum Abstand der Krafteinleitfläche und der unteren Verankerungsfläche 737 entlang der Höhenrichtung Z beiträgt.

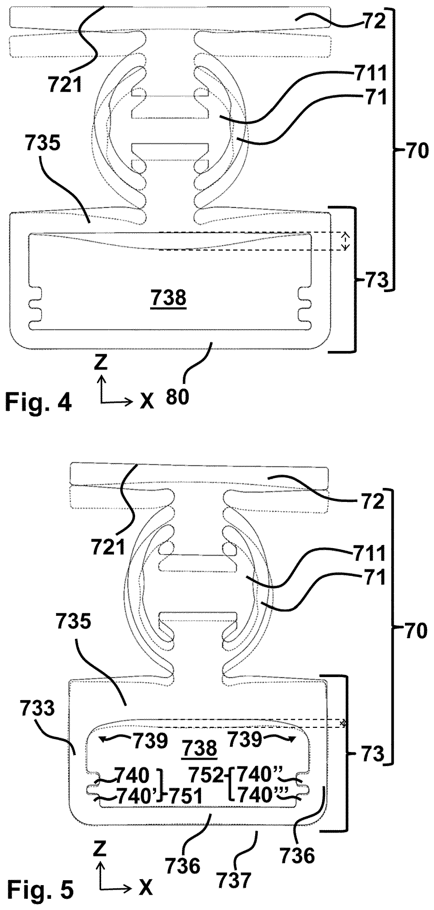

Ein Vorteil der bevorzugten Ausführungsform des Hohlprofils 70 ist im Vergleich von Fig. 4 und Fig. 5 deutlich. Fig. 4 zeigt ein Hohlprofil 70, welches als Ausgangspunkt den nächsten Stand der Technik aus Fig. 1 aufweist. Das Hohlprofil 70 ist durch ein u-förmiges Profilelement 80 erweitert, welches u-förmige Profilelement 80 bezüglich der Höhenrichtung Z unterhalb des Hohlprofils 70 aus Fig. 1 angeordnet ist. Das u-förmige Profilelement 80 bildet mit dem Verankerungselement 73 des Hohlprofils 70 aus Fig. 1 ein zweiter Hohlraum 738.

Die durchgezogene Linie zeigt das Hohlprofil 70 in Fig. 4 ohne Krafteinwirkung, während die gestrichelte Linie das Hohlprofil 70 mit einer Krafteinwirkung auf die Krafteinleitfläche 721 zeigt, wobei die Krafteinwirkung der eines Reifens entspricht, welcher mit einer Auflagefläche 120 von 315 mm mal 200 mm mittig über einem in einer Fahrbahn 1 angeordneten Hohlprofil 70 platziert ist und mit 120 kN gegen die Fahrbahnoberfläche 3 gedrückt ist. Die Verformung des Hohlprofils 70 ist zur besseren Veranschaulichung schematisch deutlich überhöht dargestellt. Im Hohlprofil 70 sind Kraftsensoren 77 angeordnet, welche der Übersichtlichkeit halber nicht dargestellt sind. Die obere Wandung 735 des zweiten Raumes ist mehr als 100 Mikrometer in Höhenrichtung Z zur unteren Wandung 736 hin verformt, wie durch den gestrichelten Doppelpfeil angedeutet. Deshalb ist das Krafteinleitelement 72 in Höhenrichtung Z deutlich in Richtung Unterschicht 5 verschoben.

In Fig. 5 ist eine bevorzugte Ausführungsform des Hohlprofils 70 dargestellt. Die durchgezogene Linie zeigt das Hohlprofil 70 in Fig. 5 ohne Krafteinwirkung, während die gestrichelte Linie das Hohlprofil 70 mit einer Krafteinwirkung auf die Krafteinleitfläche 721 zeigt, wobei die Krafteinwirkung der eines Rades 12 entspricht, welcher mit einer Auflagefläche 120 von 315 mm mal 200 mm mittig über einem in einer Fahrbahn 1 angeordneten Hohlprofil 70 platziert ist und mit 120 kN gegen die Fahrbahnoberfläche 3 gedrückt ist. Die Verformung des Hohlprofils 70 ist zur besseren Veranschaulichung schematisch deutlich überhöht dargestellt. Im Hohlprofil 70 sind Kraftsensoren 77 angeordnet, welche der Übersichtlichkeit halber nicht dargestellt sind. Die obere Wandung 735 des zweiten Raumes ist weniger als 50 Mikrometer in Höhenrichtung Z zur unteren Wandung 736 hin verformt, wie durch den gestrichelten Doppelpfeil angedeutet. Deshalb verbleibt das Krafteinleitelement 72 in Höhenrichtung Z nahezu an gleicher Position.

In bevorzugter Ausführungsform weist die vordere Wandung 733 an der inneren Fläche mindestens zwei Gesimse 740, 740' auf, welche senkrecht zur Längsrichtung Y einen rechteckigen Querschnitt aufweisen und voneinander in Höhenrichtung Z beabstandet. Die Gesimse 740, 740' sind von der Hohlkehle 739 in Höhenrichtung Z beabstandet. Maximal ein Gesims 740, 740 kann an die innere Fläche der unteren Wandung 736 anschliessen. Die Gesimse 740, 740' bilden zwischen sich eine Nut 8, welche in Höhenrichtung Z und in Breitenrichtung X ausgebildet ist. In bevorzugter Ausführungsform weist die innere Fläche der hinteren Wandung 734 mindestens zwei Gesimse 740",740''' auf, welche spiegelsymmetrisch zu den Gesimsen 740, 740' an der inneren Fläche der vorderen Wandung 733 ausgeführt sind, mit einer durch die Längsrichtung Y und die Höhenrichtung Z gegebenen Symmetrieebene. Die Gesimse 740 der inneren Fläche der vorderen Wandung 733 bilden ein vorderes Führungselement 751. Die Gesimse 740-740''' der inneren Fläche der hinteren Wandung 734 bilden ein hinteres Führungselement 752. In die Führungselemente 751, 752 ist ein plattenförmiges Element einschiebbar, beispielsweise eine Platine, welches plattenförmige Element durch die Führungselemente 751,752 beidseitig bezüglich der Breitenrichtung X gehaltert ist.

Bei Verwendung eines Hohlprofils 70 mit zweitem Hohlraum 738 in bevorzugter Ausführungsform für einen WIM Sensor 7 , ist unter Wirkung einer äusseren Kraft auf das Krafteinleitelement 72 der Teil der Kraft, welcher im Krafthauptschluss auf den Kraftsensor 77 wirkt nur unwesentlich verändert bezüglich eines aus EP0654654A1 bekannten WIM Sensors 7. Unter einer unwesentlichen Änderung wird eine Änderung von weniger als 1 % des Kraftanteils verstanden, der auf den Kraftsensor 77 wirkt, bezüglich des auf den Kraftsensor 77 eines aus EP0654654A1 bekannten WIM Sensors 7 wirkenden Kraftanteils.

Ein in Höhenrichtung Z verformbares Verankerungselement 73 wirkt sich nachteilig aus und verfälscht die vom WIM Sensor 7 ermittelte Kraft, da bei einer Krafteinwirkung das Krafteinleitelement 72 des WIM Sensors 7 in Richtung der Kraft verschoben wird. Da die Auflagefläche 120 eines Rades 12 auf der Fahrbahn 1 grösser ist als die Breite des WIM Sensors 7 in Fahrrichtung, wird das Rad 12 bei einem einsinken des Krafteinleitelements 72 von der umliegenden Fahrbahnoberfläche 3 abgestützt. Da das Rad 12 den eingesunkenen Krafteinleitungsflansch nicht über eine beliebig lange Strecke nachfolgen kann, mindert dies die auf die Krafteinleitelement 72 wirkende Kraft.

Eine auf die Fläche normierte Steifigkeit von mindestens 500 MPa/mm des WIM Sensors 7 in Höhenrichtung Z mit der möglichst steifen Unterschicht 5 ist daher essentiell für die korrekte Ermittlung der auf die Fahrbahnoberfläche 3 wirkende Kraft.

Für die Verwendung in einem WIM Sensor 7 ist das Hohlprofil 70 vorteilhafterweise aus einem elektrisch leitenden Material ausgeführt, wie aus einem Metall oder einer Metalllegierung. Dies hat den Vorteil, dass im ersten Hohlraum 711 und im zweiten Hohlraum 738 angeordnete Elemente wie Kraftsensoren 77 und WIM Elektronik 74 durch das einstückig ausgeführte Hohlprofil 70 von einem gleichförmigen elektrischen Potential umgeben sind. Durch den grossflächigen Kontakt mit der Deckschicht 4 und der Unterschicht 5 ist dieses Potential das Erdpotential. Da das Hohlprofil 70 geerdet ist, werden im ersten Hohlraum 711 und im zweiten Hohlraum 738 angeordnete Elemente vor elektromagnetischen Wellen abgeschirmt, wodurch elektromagnetische Störungen der Kraftsensorsignale und der WIM Elektronik 74 vermieden werden. Eine Erdung des Hohlprofils 70 erfolgt über einen elektrischen Leiter, der mit dem Hohlprofil 70 kraftschlüssig oder stoffschlüssig verbunden ist. Die Verbindung erfolgt im ersten Hohlraum oder im zweiten Hohlraum oder an einer äusseren Fläche des Hohlprofils.

In bevorzugter Ausführungsform sind erster Hohlraum und zweiter Hohlraum durch mindestens einen Durchgang miteinander verbunden.

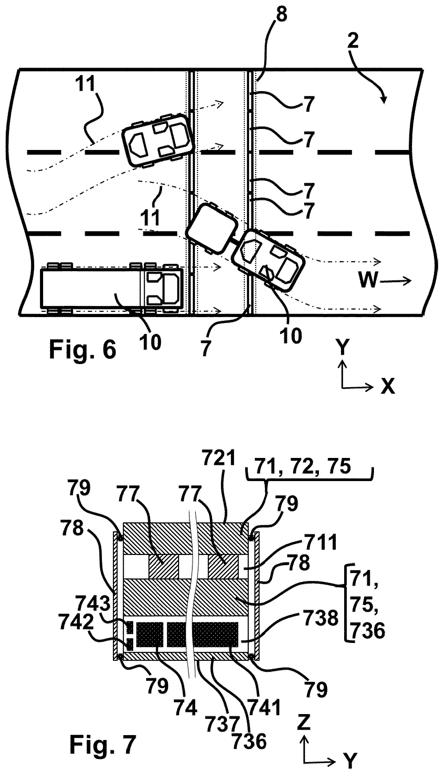

Für die Verwendung in einem WIM Sensor 7 ist das Hohlprofil 70 vorteilhafterweise an einem ersten Ende bezüglich der Längsrichtung Y mit einer Abdeckung 78 verschlossen, wie in Fig. 7 gezeigt. Für die Verwendung in einem WIM Sensor 7 ist das Hohlprofil 70 vorteilhafterweise an einem zweiten Ende bezüglich der Längsrichtung Y mit einer Abdeckung 78 verschlossen. Die Abdeckung 78 deckt das lichte Profil des ersten Hohlraumes 711 und des zweiten Hohlraumes 738 ab.

Die Abdeckung 78 trägt in Längsrichtung Y maximal 5 mm auf das Hohlprofil 70 bezüglich der Längsrichtung Y auf, sodass der WIM Sensor 7 maximal 10 mm länger ist bezüglich der Längsrichtung Y als das Hohlprofil 70. Sind zwei WIM Sensoren 7 an ihren Enden bezüglich der Längsrichtung Y anstossend nebeneinander in einer durchgehenden Nut 8 in der Deckschicht 4 angeordnet, so ist der Abstand der an den äusseren Enden im Hohlprofil 70 angeordneten Kraftsensoren 77 geringer als 200mm. Räder, welche die nebeneinander anstossend angeordneten WIM Sensoren 7 über ihren anstossenden Enden der WIM Sensoren 7 queren, sind durch die WIM Sensoren 7 erfassbar. Dies hat den Vorteil, dass mehrspurige Fahrbahnen von mehreren WIM Sensoren 7 nebeneinander durchquert werden, wie in Fig. 6 gezeigt. Mehrere Fahrspuren einer Fahrbahn 1 sind von einer durchgehenden Nut 8 durchquert und die WIM Sensoren 7 in der Nut 8 sind an ihren Enden anstössig nebeneinander in der Nut 8 angeordnet. Eine auf die Fahrbahn 1 wirkende Kraft wird an einer beliebigen Position entlang der Nut 8 über die gesamte Länge der Nut 8 durchgängig ohne Unterbruch erfasst. So werden Räder von Fahrzeugen 10, welche nicht in der designierten Fahrspur fahren, präzise von den WIM Sensoren 7 erfasst und eine Bodenreaktionskraft wird ermittelt.

Die Abdeckung 78 weist ein umlaufendes dichtendes Element 79 auf. Der erste Hohlraum 711 und der zweite Hohlraum 738 sind durch die Abdeckung 78 hermetisch abgeschlossen. Ein dichtendes Element 79 ist in einer Ausführungsform eine Dichtung aus einem Kunststoff oder Metall, welche zwischen Hohlprofil 70 und Abdeckung 78 kraftschlüssig angeordnet ist. In einer weiteren Ausführungsform ist ein dichtendes Element 79 durch eine stoffschlüssige Verbindung von Abdeckung 78 und Hohlprofil 70 gegeben, beispielsweise durch einen Klebstoff, ein Harz, eine Lötverbindung oder eine Schweissverbindung. Dies hat den Vorteil, dass die WIM Elektronik 74 und die Kraftsensoren 77 vor äusseren Einflüssen geschützt ist, wie beispielsweise Feuchtigkeit, Flüssigkeiten, Gasen, Staub und anderen Partikeln.

In einer Ausführungsform weist der zweite Hohlraum 738 einen Speicher 741 für elektrische Energie auf, wie in Fig. 7 gezeigt.

In einer Ausführungsform des WIM Sensor 7 ist mindestens eine Abdeckung 78 durchlässig für mindestens eine Frequenz einer elektromagnetischen Welle mit einer Frequenz im ISM-Band (Industrial, Scientific and Medical Band) zwischen 6,765 MHz und 246 GHz. Durchlässig bedeutet eine Abschwächung der Intensität der Wellen von nicht mehr als 50%. In dieser Ausführungsform ist, wie in Fig. 7 gezeigt, im zweiten Hohlraum 738 eine Funkeinheit 743 zur drahtlosen Übertragung von Datensignalen angeordnet, welche Datensignale aus einer Auswertung oder Wandlung der von den Kraftsensoren 77 ermittelten Kraftsignale stammen. Dies hat den Vorteil, dass die Abdeckung 78 keine Kabeldurchführung aufweist, was den hermetischen Abschluss des Hohlprofils 70 wesentlich einfacher und kostengünstiger gestaltet.

In einer weiteren Ausführungsform ist mindestens eine Abdeckung 78 durchlässig für mindestens eine Frequenz einer elektromagnetischen Welle zwischen 10 kHz und 5 MHz und der zweite Hohlraum 738 weist ein Übertragungseinheit 742 zur drahtlosen Übertragung von elektrischer Energie auf, wie in Fig. 7 gezeigt.

### Bezugszeichenliste

- 1: Fahrbahn
- 3: Fahrbahnoberfläche
- 4: Deckschicht
- 5: Unterschicht
- 6: Vergussmasse
- 7: WIM Sensor
- 8: Nut
- 10: Fahrzeug
- 11: Radspur
- 12: Rad
- 70: Profil
- 71: Rohrteil
- 72: Krafteinleitelement
- 73: Verankerungselement
- 74: WIM Elektronik
- 75: Verbindung
- 77: Kraftsensor
- 78: Abdeckung
- 79: dichtendes Element
- 80: u-förmiges Profilelement
- 90: Kraftlinie
- 120: Auflagefläche
- 711: erster Hohlraum
- 721: Krafteinleitfläche
- 733: vordere Wandung
- 734: hintere Wandung
- 735: obere Wandung
- 736: untere Wandung
- 737: untere Verankerungsfläche
- 738: zweiter Hohlraum
- 739: Hohlkehle
- 740, 704', 740", 740''': Gesims
- 741: Speicher
- 742: Übertragungseinheit
- 743: Funkeinheit
- 751: vorderes Führungselement
- 752: hinteres Führungselement
- W: Fahrbahnrichtung
- X: Breitenrichtung
- Y: Längsrichtung
- Z: Höhenrichtung

## Patentansprüche

1. Hohlprofil (70) für einen WIM Sensor (7); welches Hohlprofil (70) entlang einer Längsrichtung (Y) lang ausgestaltet ist; welches Hohlprofil (70) ein plattenförmiges Krafteinleitelement (72) aufweist; welches Hohlprofil (70) ein Verankerungselement (73) aufweist; zwischen welchen Krafteinleitelement (72) und Verankerungselement (73) ein Rohrteil (71) angeordnet ist; welches Rohrteil (71) einen ersten Hohlraum (711) umschliesst; welches Verankerungselement (73) und welches Rohrteil (71) und welches Krafteinleitelement (72) einstückig ausgeführt sind; welches Rohrteil (71) mit dem Krafteinleitelement (72) und mit dem Verankerungselement (73) einstückig verbunden ist; **dadurch gekennzeichnet, dass** das Verankerungselement (73) mindestens einen zweiten Hohlraum (738) umschliesst.

2. Hohlprofil (70) nach Anspruch 1, **dadurch gekennzeichnet, dass** Krafteinleitelement (72) und Verankerungselement (73) diametral um das Rohrteil (71) angeordnet sind.

3. Hohlprofil (70) nach Anspruch 2, **dadurch gekennzeichnet, dass** das Verankerungselement (73) weitgehend quaderförmig ausgeführt ist; dass das Verankerungselement (73) eine dem Rohrteil (71) abgewandte Fläche, untere Verankerungsfläche (737) genannt, aufweist; dass die Höhenrichtung (Z) des Hohlprofils (70) senkrecht zur Verankerungsfläche ist; dass die Breitenrichtung (X) des Hohlprofils (70) senkrecht zur Höhenrichtung (Z) und senkrecht zur Längsrichtung (Y) ist; dass der zweite Hohlraum (738) begrenzt ist durch eine plattenförmige obere Wandung (735) des Verankerungselements (73), dass der zweite Hohlraum (738) begrenzt ist durch eine plattenförmige untere Wandung (736) des Verankerungselements (73), dass die obere Wandung (735) und die untere Wandung (736) weitgehend parallel ausgeführt sind, dass der zweite Hohlraum (738) begrenzt ist durch eine plattenförmige vordere Wandung (733) des Verankerungselements (73); dass die vordere Wandung (733) die obere Wandung (735) und die untere Wandung (736) verbindet; dass der zweite Hohlraum (738) begrenzt ist durch eine plattenförmige hintere Wandung (734) des Verankerungselements (73); dass die hintere Wandung (734) die obere Wandung (735) und die untere Wandung (736) verbindet; und dass die vordere Wandung (733) und die hintere Wandung (734) in Breitenrichtung (X) beabstandet sind.

4. Hohlprofil (70) nach Anspruch 3, **dadurch gekennzeichnet, dass** der Übergang im lichten Profil von der oberen Wandung (735) in die vordere Wandung (733) als Hohlkehle (739) ausgestaltet ist; dass der Übergang im lichten Profil von der oberen Wandung (735) in die hintere Wandung (734) als Hohlkehle (739) ausgestaltet ist.

5. Hohlprofil (70) nach Anspruch 4, **dadurch gekennzeichnet, dass** das Krafteinleitelement (72) eine dem Rohrteil (71) abgewandte Fläche, Krafteinleitfläche (721) genannt, aufweist; dass die Krafteinleitfläche (721) weitgehend parallel zur unteren Verankerungsfläche (737)ausgerichtet ist; und dass der Abstand zwischen der Krafteinleitfläche (721) und der unteren Verankerungsfläche (737) entlang der Höhenrichtung (Z) geringer ist als 55 mm.

6. Hohlprofil (70) nach einem der Ansprüche 3 bis 5, **dadurch gekennzeichnet, dass** die vordere Wandung (733) ein vorderes Führungselement (751) aufweist; dass die hintere Wandung (734) ein hinteres Führungselement (752) aufweist; dass in das vordere Führungselement (751) und das hinteres Führungselement (752) ein plattenförmiges Element einschiebbar ist.

7. WIM Sensor (7) mit einem Hohlprofil (70) nach einem der Ansprüche 1 bis 6, in welchem Rohrteil (71) des Hohlprofils (70) mindestens ein Kraftsensor (77) angeordnet ist; welcher WIM Sensor (7) in eine Fahrbahn (1) eingebaut ist; **dadurch gekennzeichnet, dass** unter Wirkung einer äusseren Kraft auf das Krafteinleitelement (72) ein Kraftfluss durch das Krafteinleitelement (72) auf das Rohrteil (71) wirkt, dass die Wandung des Rohres ein Kraftnebenschluss des Kraftflusses sind, dass der Kraftsensor (77) ein Krafthauptschluss des Kraftflusses ist; dass der Teil der Kraft, welcher im Krafthauptschluss wirkt, auf den Kraftsensor (77) wirkt; und dass der zweite Hohlraum (738) die Krafteinwirkung auf den Kraftsensor (77) weniger als 1% verändert bezüglich eines WIM Sensors mit einem plattenförmigen Verankerungselement, welches keinen Hohlraum aufweist.

8. WIM Sensor (7) nach Anspruch 7, **dadurch gekennzeichnet, dass** das Hohlprofil (70) aus einem elektrisch leitenden Material, einem Metall oder einer Metalllegierung ausgeführt ist; dass im ersten Hohlraum (711) und im zweiten Hohlraum (738) angeordnete Elemente durch das einstückig ausgeführte Hohlprofil (70) von einem gleichförmigen elektrischen Potential umgeben sind; und dass dieses Potential das Erdpotential ist.

9. WIM Sensor (7) nach einem der Ansprüche 7 bis 8, **dadurch gekennzeichnet, dass** der WIM Sensor in einer Höhenrichtung (Z) senkrecht zur Krafteinleitfläche (721) eine auf eine Fläche normierte Steifigkeit von mindestens 500 MPa/mm aufweist.

10. WIM Sensor (7) nach einem der Ansprüche 7 bis 9, **dadurch gekennzeichnet, dass** ein erstes Ende des Hohlprofils (70) durch eine Abdeckung (78) abgedeckt ist; wobei die Abdeckung (78) das lichte Profil des ersten und des zweiten Hohlraums (738) abdeckt; und dass ein zweites Ende des Hohlprofils (70) durch eine Abdeckung (78) abgeschlossen ist; und dass die Abdeckungen (78) den WIM Sensor (7) um maximal 10 mm gegenüber der Länge des Hohlprofils (70) verlängern bezüglich der Längsrichtung (Y).

11. WIM Sensor (7) nach Anspruch 10, **dadurch gekennzeichnet, dass** die Abdeckung (78) ein umlaufendes dichtendes Element (79) aufweist; und dass die Abdeckung (78) den ersten Hohlraum (711) und den zweiten Hohlraum (738) hermetisch abschliessen.

12. WIM Sensor (7) nach einem der Ansprüche 10 bis 11, **dadurch gekennzeichnet, dass** mindestens eine Abdeckung (78) durchlässig für elektromagnetische Wellen einer Frequenz zwischen 6,765 MHz und 246 GHz ausgeführt ist; und dass der zweite Hohlraum (738) ein Funkeinheit (743) zur drahtlosen Übertragung von Daten aufweist.

13. WIM Sensor (7) nach einem der Ansprüche 7 bis 12, **dadurch gekennzeichnet, dass** der zweite Hohlraum (738) einen Speicher (741) für elektrische Energie aufweist.

14. WIM Sensor (7) nach einem der Ansprüche 11 bis 13, **dadurch gekennzeichnet, dass** mindestens eine Abdeckung (78) durchlässig für elektromagnetische Wellen einer Frequenz zwischen 10 kHz und 5 MHz ausgeführt ist; und dass der zweite Hohlraum (738) ein Übertragungseinheit (742) zur drahtlosen Übertragung von elektrischer Energie aufweist.

15. Messverfahren unter Verwendung mindestens zweier WIM Sensoren (7) nach einem der Ansprüche 7 bis 14, **dadurch gekennzeichnet, dass** WIM Sensoren (7), welche an ihren Enden anstössig nebeneinander in einer durchgehenden Nut (8), welche mehrere Fahrspuren einer Fahrbahn (1) durchquert, angeordnet sind, eine an einer beliebigen Position entlang der Nut (8) auf die Fahrbahn wirkende Kraft über die gesamte Länge der Nut (8) durchgängig ohne Unterbruch erfassen.

## Claims

1. A hollow profile (70) for a WIM sensor (7); which hollow profile (70) is elongated along a longitudinal direction (Y); said hollow profile (70) comprising a plate-shaped force introduction element (72); said hollow profile (70) comprising an anchoring element (73); wherein a tubular element (71) is arranged between said force introduction element (72) and said anchoring element (73); which tubular element (71) encloses a first cavity (711); which anchoring element (73) and which tubular element (71) and which force introduction element (72) are formed integrally with each other; said tubular element (71) being integrally connected to the force introduction element (72) and to the anchoring element (73); **characterized in that** the anchoring element (73) encloses at least one second cavity (738).

2. The hollow profile (70) according to claim 1, **characterized in that** the force introduction element (72) and the anchoring element (73) are arranged diametrically opposite to each other around the tubular element 71.

3. The hollow profile (70) according to claim 2, **characterized in that** the anchoring element (73) is substantially cuboid in shape; the anchoring element (73) comprising a surface that faces away from the tubular element (71), called the lower anchoring surface (737); the height direction (Z) of the hollow profile (70) is perpendicular to said anchoring surface; the width direction (X) of the hollow profile (70) is perpendicular to the height direction (Z) and perpendicular to the longitudinal direction (Y); the second cavity (738) is delimited by a plate-shaped upper wall (735) of the anchoring element (73), the second cavity (738) is delimited by a plate-shaped lower wall (736) of the anchoring element (73), the upper wall (735) and the lower wall (736) being substantially parallel, the second cavity (738) is delimited by a plate-shaped front wall (733) of the anchoring element (73); wherein the front wall (733) connects the upper wall (735) and the lower wall (736); the second cavity (738) is delimited by a plate-shaped rear wall (734) of the anchoring element (73); wherein the rear wall (734) connects the upper wall (735) and the lower wall (736); and **in that** the front wall (733) and the rear wall (734) are spaced apart in the width direction (X) .

4. The hollow profile (70) according to claim 3, **characterized in that** the transition from the upper wall (735) to the front wall (733) is formed in the internal space as an indentation (739); the transition of the upper wall (735) to the rear wall (734) is formed in the internal space as an indentation (739).

5. The hollow profile (70) according to claim 4, **characterized in that** the force introduction element (72) comprises a surface that faces away from the tubular element (71), called the force introduction surface (721); said force introduction surface (721) being arranged substantially parallel to the lower anchoring surface (737); and **in that** the distance between the force introduction surface (721) and the lower anchoring surface (737) along the height direction (Z) is less than 55 mm.

6. The hollow profile (70) according to any of claims 3 to 5, **characterized in that** the front wall (733) has a front guiding element (751); the rear wall (734) has a rear guiding element (752); wherein a plate-shaped element is insertable in the front guiding element (751) and in the rear guiding element (752).

7. A WIM sensor (7) comprising a hollow profile (70) according to any of claims 1 to 6, wherein at least one force sensor (77) is arranged in the tubular element (71) of the hollow profile (70); which WIM sensor (7) is mounted in a roadway (1); **characterized in that** under the action of an external force onto the force introduction element (72) a flow of forces through the force introduction element (72) acts on the tubular element (71), wherein the tube wall lies in a secondary force path of the flow of forces and the force sensor (77) lies in a main force path of the flow of forces; the component of the force acting in the main force path acts on the force sensor (77); and **in that** the second cavity (738) changes the force acting onto the force sensor (77) by less than 1% as compared to a WIM sensor comprising a plate-shaped anchoring element without a cavity.

8. The WIM sensor (7) according to claim 7, **characterized in that** the hollow profile (70) is made of an electrically conductive material, a metal or a metal alloy; elements disposed in the first cavity (711) and in the second cavity (738) are surrounded by a uniform electrical potential due to the integrally formed hollow profile (70); and **in that** this potential is the ground potential.

9. The WIM sensor (7) according to any of claims 7 to 8, **characterized in that** the WIM sensor has a surface-normalized stiffness of at least 500 MPa/mm in a height direction (Z) perpendicular to the force introduction surface (721).

10. The WIM sensor (7) according to any of claims 7 to 9, **characterized in that** a first end of the hollow profile (70) is closed by a cover (78); said cover (78) covering the internal space of the first and second cavities (738); and a second end of the hollow profile (70) is closed by a cover (78); and **in that** the covers (78) add to the length of the WIM sensor (7) a maximum of 10 mm as compared to the length of the hollow profile (70) along the longitudinal direction (Y).

11. The WIM sensor (7) according to claim 10, **characterized in that** the cover (78) comprises a circumferential sealing element (79); and **in that** the covers (78) hermetically seal the first cavity (711) and the second cavity (738).

12. The WIM sensor (7) according to any of claims 10 to 11, **characterized in that** at least one cover (78) is constructed to be penetrable by electromagnetic waves with a frequency between 6.765 MHz and 246 GHz; and **in that** the second cavity (738) comprises a radio unit (743) for wireless transmission of data.

13. The WIM sensor (7) according to any of claims 7 to 12, **characterized in that** the second cavity (738) comprises an electrical energy storage device (741).

14. The WIM sensor (7) according to any of claims 11 to 13, **characterized in that** at least one cover (78) is configured to be penetrable by electromagnetic waves with a frequency between 10 kHz and 5 MHz; and **in that** the second cavity (738) comprises a transmission unit (742) for wireless transmission of electrical energy.

15. A measuring method using at least two WIM sensors (7) according to any of claims 7 to 14, **characterized in that** WIM sensors (7) arranged with abutting ends adjacent to each other in a continuous groove (8) spanning several lanes of a roadway (1) detect a force acting on the roadway at any position along the groove (8) continuously without interruption over the entire length of the groove (8) .

## Revendications

1. Profil creux (70) pour un capteur WIM (7), dans lequel ledit profil creux (70) est de forme allongée selon une direction longitudinale (Y); ledit profil creux (70) comprend un élément d'introduction de force (72) en forme de plaque; ledit profil creux (70) comprend un élément d'ancrage (73); dans lequel un élément tubulaire (71) est agencé entre ledit élément d'introduction de force (72) et ledit élément d'ancrage (73); ledit élément tubulaire (71) entoure une première cavité (711); ledit élément d'ancrage (73) et ledit élément tubulaire (71) et ledit élément d'introduction de force (72) sont formés d'un seul tenant; ledit élément tubulaire (71) est relié intégralement à l'élément d'introduction de force (72) et à l'élément d'ancrage (73); **caractérisé en ce que** l'élément d'ancrage (73) entoure au moins une seconde cavité (738).

2. Profil creux (70) selon la revendication 1, **caractérisé en ce que** l'élément d'introduction de force (72) et l'élément d'ancrage (73) sont disposés diamétralement opposés l'un à l'autre autour de l'élément tubulaire 71.

3. Profil creux (70) selon la revendication 2, **caractérisé en ce que** l'élément d'ancrage (73) est de forme sensiblement cuboïde; ledit élément d'ancrage (73) comprenant une surface, opposée à l'élément tubulaire (71), appelée la surface d'ancrage inférieure (737); **en ce que** la direction de la hauteur (Z) du profil creux (70) est perpendiculaire à ladite surface d'ancrage; la direction de la largeur (X) du profil creux (70) est perpendiculaire à la direction de la hauteur (Z) et perpendiculaire à la direction longitudinale (Y); la seconde cavité (738) est délimitée par une paroi supérieure (735) de l'élément d'ancrage (73) en forme de plaque, la seconde cavité (738) est délimitée par une paroi inférieure (736) de l'élément d'ancrage (73) en forme de plaque, ladite paroi supérieure (735) et ladite paroi inférieure (736) étant sensiblement parallèles l'une à l'autre, **en ce que** la seconde cavité (738) est délimitée par une paroi avant (733) de l'élément d'ancrage (73) en forme de plaque; dans lequel ladite paroi avant (733) relie la paroi supérieure (735) et la paroi inférieure (736); **en ce que** la seconde cavité (738) est délimitée par une paroi arrière (734) de l'élément d'ancrage (73) en forme de plaque; dans lequel ladite paroi arrière (734) relie la paroi supérieure (735) et la paroi inférieure (736); et **en ce que** la paroi avant (733) et la paroi arrière (734) sont espacées l'une de l'autre dans la direction de la largeur (X).

4. Profil creux (70) selon la revendication 3, **caractérisé en ce que** la transition du profil libre de la paroi supérieure (735) à la paroi avant (733) est réalisée sous forme d'une gorge (739); **en ce que** la transition du profil libre de la paroi supérieure (735) à la paroi arrière (734) est réalisée sous forme d'une gorge (739).

5. Profil creux (70) selon la revendication 4, **caractérisé en ce que** l'élément d'introduction de force (72) comprend une surface, opposée à l'élément tubulaire (71), appelée la surface d'introduction de force (721); ladite surface d'introduction de force (721) étant disposée sensiblement parallèlement à la surface d'ancrage inférieure (737); et **en ce que** la distance entre la surface d'introduction de force (721) et la surface d'ancrage inférieure (737) dans la direction de la hauteur (Z) est inférieure à 55 mm.

6. Profil creux (70) selon l'une quelconque des revendications 3 à 5, **caractérisé en ce que** la paroi avant (733) comprend un élément de guidage avant (751); la paroi arrière (734) comprend un élément de guidage arrière (752); et **en ce qu'**un élément en forme de plaque peut être inséré dans l'élément de guidage avant (751) et dans l'élément de guidage arrière (752).

7. Capteur WIM (7) comprenant un profil creux (70) selon l'une quelconque des revendications 1 à 6, dans lequel au moins un capteur de force (77) est disposé dans l'élément tubulaire (71) du profil creux (70); ledit capteur WIM (7) étant monté dans une voie de chaussée (1); **caractérisé en ce que** sous l'action d'une force externe sur l'élément d'introduction de force (72), un flux de forces à travers l'élément d'introduction de force (72) agit sur l'élément tubulaire (71), **en ce que** la paroi du tube est un chemin de force secondaire du flux de forces, **en ce que** ledit capteur de force (77) est un chemin de force principal du flux de forces; la composante de la force agissant dans le chemin de force principal agit sur le capteur de force (77); et **en ce que** la seconde cavité (738) modifie la force agissant sur le capteur de force (77) de moins de 1% par rapport à un capteur WIM comprenant un élément d'ancrage en forme de plaque sans cavité.

8. Capteur WIM (7) selon la revendication 7, **caractérisé en ce que** le profil creux (70) est réalisé en matériau électriquement conducteur, en un métal ou un alliage métallique; **en ce que** des éléments disposés dans la première cavité (711) et dans la seconde cavité (738) sont entourés d'un potentiel électrique uniforme dû au profil creux (70) formé d'un seul tenant; et **en ce que** ce potentiel est le potentiel du sol.

9. Capteur WIM (7) selon l'une quelconque des revendications 7 à 8, **caractérisé en ce que** ledit capteur WIM a une raideur normalisée en surface d'au moins 500 MPa / mm dans une direction de la hauteur (Z) perpendiculaire à la surface d'introduction de force (721).

10. Capteur WIM (7) selon l'une quelconque des revendications 7 à 9, **caractérisé en ce qu'**une première extrémité du profil creux (70) est couverte par un couvercle (78); ledit couvercle (78) recouvrant le profil libre des première et seconde cavités (738); et **en ce qu'**une seconde extrémité du profil creux (70) est couverte par un couvercle (78); et **en ce que** les couvercles (78) ajoutent à la longueur du capteur WIM (7) un maximum de 10 mm par rapport à la longueur du profil creux (70) selon la direction longitudinale (Y).

11. Capteur WIM (7) selon la revendication 10, **caractérisé en ce que** le couvercle (78) comprend un élément d'étanchéité circonférentiel (79); et **en ce que** le couvercle (78) scelle hermétiquement la première cavité (711) et la seconde cavité (738).

12. Capteur WIM (7) selon l'une quelconque des revendications 10 à 11, **caractérisé en ce qu'**au moins un couvercle (78) est réalisé de manière à être pénétrable par des ondes électromagnétiques de fréquence comprise entre 6,765 MHz et 246 GHz; et **en ce que** la seconde cavité (738) comprend une unité radio (743) pour la transmission sans fil de données.

13. Capteur WIM (7) selon l'une quelconque des revendications 7 à 12, **caractérisé en ce que** la seconde cavité (738) comprend un dispositif de stockage d'énergie électrique (741) .

14. Capteur WIM (7) selon l'une quelconque des revendications 11 à 13, **caractérisé en ce qu'**au moins un couvercle (78) est réalisé de manière à être pénétrable par des ondes électromagnétiques de fréquence comprise entre 10 kHz et 5 MHz; et **en ce que** la seconde cavité (738) comprend une unité de transmission (742) pour la transmission sans fil d'énergie électrique.

15. Procédé de mesure utilisant au moins deux capteurs WIM (7) selon l'une quelconque des revendications 7 à 14, **caractérisé en ce que** des capteurs WIM (7) disposés de manière que leurs extrémités viennent en butée l'une contre l'autre dans une rainure continue (8) s'étendant sur plusieurs voies d'une chaussée (1) sont aptes à détecter une force agissant sur la chaussée en une position quelconque le long de la rainure (8) en continu sans interruption sur toute la longueur de la rainure (8) .
